**Europäisches Patentamt**

**European Patent Office**

**Office européen des brevets**

(11) Veröffentlichungsnummer: **0 191 445**
A2

(12) # EUROPÄISCHE PATENTANMELDUNG

(21) Anmeldenummer: 86101662.4

(22) Anmeldetag: 10.02.86

(51) Int. Cl.⁴: **B 29 C 37/00,** B 29 C 31/06, G 05 B 19/12

(30) Priorität: 15.02.85 DE 3505155

(43) Veröffentlichungstag der Anmeldung: 20.08.86 Patentblatt 86/34

(84) Benannte Vertragsstaaten: CH DE FR GB IT LI NL

(71) Anmelder: **Elastogran Maschinenbau GmbH, D-2844 Lemförde (DE)**

(72) Erfinder: **Koentges, Gerhard, Brunnenstrasse 4, D-4500 Osnabrück (DE)**

(74) Vertreter: **Schweiss, Werner, Dr. et al, BASF Aktiengesellschaft Patentabteilung Carl-Bosch-Strasse 38, D-6700 Ludwigshafen (DE)**

(54) Vorrichtung zur Herstellung von Formteilen aus Mehrkomponentenkunststoff, insbesondere Polyurethan, mit einer Programmsteuerung.

(57) Die Vorrichtung zur Herstellung von Formteilen, vorzugsweise aus Polyurethan, weist einen Förderer auf, der vorzugsweise ein Endlosförderer in Form eines Rundtisches 2 ist, auf dem die zu füllenden Formen 3 auswechselbar angeordnet sind. Eine Mischvorrichtung mit Mischkopf 8 ist zum Füllen der Formen vorgesehen. Ebenso ist eine Entformungsstation 5 vorhanden. Jede Form 3 weist einen Stecker 10 auf, der die Verbindung mit der Programmsteuerung 1 herstellt und dessen Kontakte so eingestellt sind, dass sie durch einen entsprechenden Code das ihnen zugeordnete Programm festlegen. Ein Decodiergerät 6 übersetzt diesen Code und bestimmt das entsprechende Programm. Hierdurch werden Fehlbedienungen durch falsche Programmvorwahl vermieden. Jede Form legt durch die Codierung an den Kontakten ihres Steckers ihr Programm selbst fest.

Elastogran Maschinenbau GmbH

0 191 445

Vorrichtung zur Herstellung von Formteilen aus Mehrkomponentenkunststoff, insbesondere Polyurethan, mit einer Programmsteuerung

Die Erfindung betrifft eine Vorrichtung nach dem Oberbegriff des Anspruches 1.

Derartige Vorrichtungen sind in der unterschiedlichsten Ausgestaltung bekannt. Der Förderer ist häufig ein Endlosförderer, der als sog. Rundtisch
ausgebildet ist. Die Formen werden an der Mischvorrichtung gefüllt und an
der Entformungseinrichtung entleert. Die Entformungseinrichtung wird als
"Roboter" bezeichnet. Die Formen müssen auswechselbar sein, damit die
Anlage entsprechend universell zur Herstellung der unterschiedlichsten
Formteile eingesetzt werden kann. Für jede Form müssen die Füllparameter
wie Füllzeit, Mischungsverhältnis, Mischkopfstellung und ggf. Trennmittelzugabe neu eingestellt werden. Dieses geschieht durch die Programmsteuerung. Für jede Form ist also ein bestimmtes Programm vorhanden, das
in dem entsprechenden Rechner für die auf den Förderer aufgesetzte Form
ausgewählt werden muß. Hierbei kommt es in der Praxis häufig zu einer
Fehlauswahl, d.h. es wird ein Programm ausgewählt, das nicht für die auf
dem Förderer befindliche Form bestimmt ist. Dieses führt zu Fehlbedienungen und zu Ausschuß.

Der Erfindung liegt nun die Aufgabe zugrunde, eine Vorrichtung der eingangs genannten Art zu schaffen, bei der Fehlbedienungen durch falsche
Programmauswahl vermieden werden.

Diese Aufgabe wird durch das Kennzeichen des Anspruches 1 gelöst.

Erfindungsgemäß erfolgt die Programmauswahl nicht mehr am Rechner, sondern praktisch an der Form selbst. Durch die Einstellung und Codierung
der Kontakte des Steckers wird ein Code festgelegt, der dem entsprechenden Programm entspricht. In dem Dekodiergerät, das mit der Programmsteuerung entsprechend verbunden ist, wird dieser Code dann in ein entsprechendes Signal umgesetzt, um den Rechner programmgemäß zu steuern. Fehlbedienungen sind hierdurch ausgeschlossen, da die Form das Programm durch
die Einstellung der Kontakte selbst festlegt. Auch ist die Bedienung einfach, da die Stecker nur mechanisch in die entsprechende Buchse am Förderer eingesteckt werden müssen und dann die gesamte Herstellung automatisch abläuft.

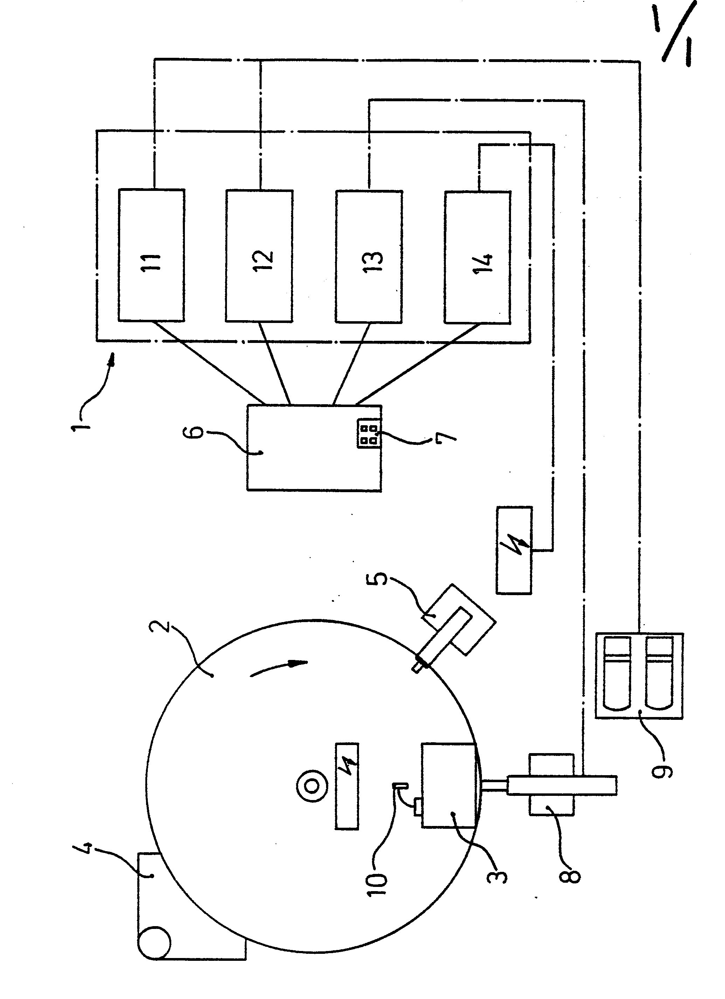

Im folgenden wird unter Hinweis auf die Zeichnung anhand einer einzigen
Figur eine schematische Darstellung einer Ausführungsform näher erläutert.

Wr/HB

Die in Draufsicht dargestellte Vorrichtung besteht aus einem Steuergerät, das allgemein mit 1 bezeichnet ist und verschiedene Funktionen vereint.

Der Förderer ist als Rundtisch 2 mit einem Antrieb 4 ausgebildet. Auf dem Rundtisch 2 sind verschiedene Formen 3 auswechselbar angeordnet. Jede Form ist mit einem Stecker 10 versehen, der die in unterschiedlicher Weise einstellbaren Codierungstakte trägt. Ein Mischkopf ist mit 8 bezeichnet. Dieser wird von einer Mischvorrichtung 9 versorgt, die Pumpen, Lagertanks usw. enthält.

Eine als Roboter bezeichnete Entformungsvorrichtung 5 entnimmt die Formteile aus der Form und bereitet diese für den nächsten Formvorgang vor. Hier kann ggf. auch ein Trennmittel aufgegeben werden.

In der Programmsteuerung 1 ist ein Dekodiergerät 6 und eine Programmvorwahl 7 vorgesehen. Diese Geräte steuern, wie schematisch angedeutet, u.a. die Schäumzeit (durch die Einheit 11), das Mischungsverhältnis (durch 12), die Mischkopfstellung und das weitere Mischkopfprogramm (durch 13) sowie die Entformeinrichtung und ggf. die Trennmittelaufgabe (durch 14).

Es ist ohne weiteres erkennbar, daß durch diese Art der Ausbildung praktisch die Form selbst sämtliche Verfahrensschritte festlegt, die zur Herstellung "ihres" Formteils erforderlich ist. Fehlbedienungen durch Auswahl falscher Programme sind nicht möglich.

Patentanspruch

Vorrichtung zur Herstellung von Formteilen aus Mehrkomponentenkunststoff, insbesondere Polyurethan, mit einer Programmsteuerung für einen Förderer (2) auf dem die zu füllenden Formen (3) auswechselbar angeordnet sind, für eine Mischvorrichtung (8) zum Füllen der Formen und für eine Entformungseinrichtung (5), dadurch gekennzeichnet, daß in einem Stecker (10) jeder Form (3), der die Verbindung mit einer Programmsteuerung (1) herstellt, Kontakte vorgesehen sind, die einen, dem gewünschten Programm entsprechenden Code für diese Form festlegen, und daß ein Decodiergerät (6) zur Einschaltung des durch den Code festgelegten Programms vorgesehen ist.

Zeichn.